# EUROPEAN PATENT APPLICATION

(11) **EP 1 176 331 A2**
(43) Date of publication of application: **30.01.2002**
(21) Application number: 01202748.8
(22) Date of filing: 19.07.2001
(51) Int. Cl.: F16F 1/371

(54) **System for fixing elastomeric devices to a carrying structure**

(30) Priority: 25.07.2000 IT MI001701
(71) Applicant: Inso Sistemi Per Le Infrastrutture Sociali S.R.L, 50127 Firenze (IT)
(72) Inventor: Cipolloni, Annalisa, 50100 Firenze (IT); Dusi, Alberto, 26020 Azzanello (Cremona) (IT); Forni, Massimo, 40010 S. Matteo Della Decima (Bologna) (IT)
(74) Representative: De Gregori, Antonella

(57) **Abstract**

A system (40) for fixing elastomeric devices to a structure, comprises at least one seismic isolator, housed between a first position relating to the carrying structure, and a second position relating to the isolated structure, and has substantially flat plates, each having an at least partially knurled surface, so that said knurling, by penetrating the innermost layer of the elastomer of the device creates, under the action of a vertical load, an extremely shear resistant constraint.

## Description

The present invention relates to a system for fixing elastomeric devices to a carrying structure.

In the current state of anti-seismic technologies, apart from the traditional method based on the concept of ductility, which comprises constraints fixed to the ground, another particular anti-seismic system based on seismic isolation, is also known.

This known anti-seismic system particularly involves separation between the building structure to be protected and the foundation, this separation being obtained by means of devices (in particular seismic isolators) situated at the base of the building or, alternatively, situated directly beneath the beams of the first floor.

As is known, these seismic isolators can consist of elastomeric devices, which comprise a series of bearings, normally made of natural rubber or rubber containing additives or other polymers, and which contain one or more plates made of steel or another reinforcing material.

The elastomeric devices described are commonly used for the following purposes.

In the first place, the elastomeric devices are used for seismically isolating a carrying structure (or a specific part thereof) in order to protect it (or to protect its contents) from seismic action; in this case the elastomeric device is called a seismic isolator.

Secondly, the elastomeric devices are used for allowing the relative shifting between two parts of the same structure (shifting due, for example, to thermal deformation); in this case the elastomeric device is called support.

Seismic isolators, interposed between the carrying structure and part to be isolated, significantly increase the oscillation period of the isolated part itself, considerably reducing accelerations and consequently inertial force acting on the structure or its contents to be protected.

Particular examples of these applications are: the protection of electronic equipment (for example in control rooms, laboratories, etc.), valuable objects (for example, museums, exhibitions) and people (for example, clinics, hospitals).

Supporting devices, on the other hand, which are interposed, for example, between the pillar and floor system in viaducts, allow relative shifting due to thermal deformation caused by variations in the external temperature, without damaging the structure to which they are applied.

In both of the above-mentioned cases, the elastomeric devices used must transmit shear strain to the structure.

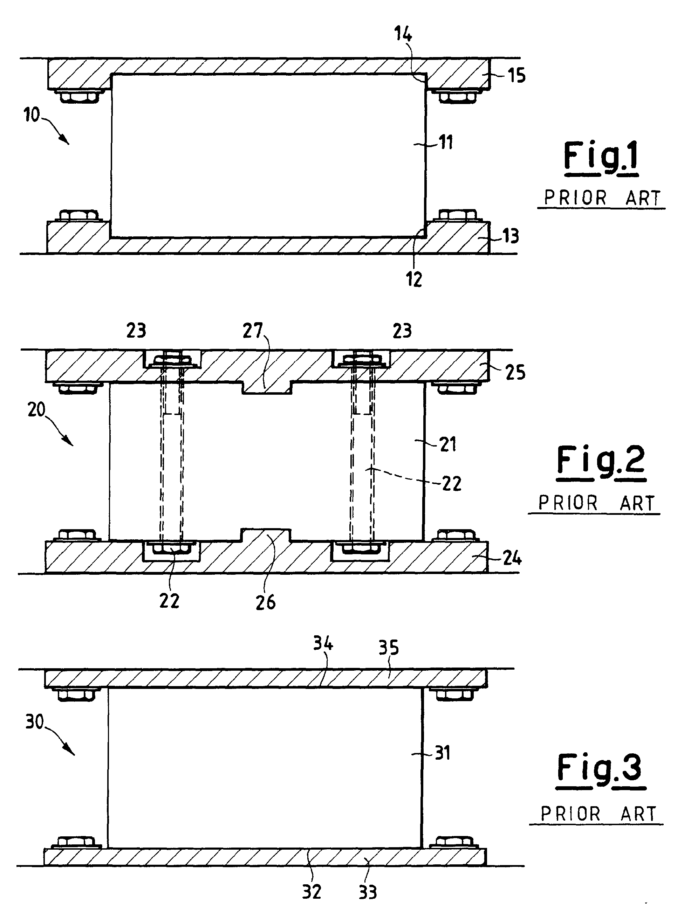

At present, the connection between seismic isolator and carrying structure takes place with the following types of constraint, which, to allow a better understanding of the technical problems relating to the known art, are schematically represented in the enclosed figures 1-3 respectively.

Firstly, it can be observed that the connection between seismic isolator and carrying structure is obtained by means of a containment constraint, in which the seismic isolator is housed in a recess situated in the plate connected to the carrying structure.

This solution is schematically represented in figure 1, which illustrates the so-called containment system, globally indicated by reference number 10.

In this former solution, a seismic isolator 11 is housed in a recess 12, situated in the carrying structure 13 and in a corresponding recess 14, situated in the isolated structure 15.

This solution involves mechanical processing (in particular turning) of the containment plate and requires a higher thickness of the latter, with a consequent increase in the production cost.

A second type of known constraint is obtained by means of a system which uses pins 22 and bolts 23, said solution being schematically represented in figure 2 and globally indicated by reference number 20.

In this second solution, an elastomeric device 21 is positioned between a carrying structure 24, and an isolated structure 25, the elastomeric device 21 being fixed in position by means of a system consisting of pins 22 and bolts 23, and wherein said fixture is completed with the aid of ribs 26 and 27.

This solution naturally configures a very effective constraint but which obviously requires considerable mechanical processing, both of the anchoring plate (which necessitates a greater thickness), and of the external plate of the elastomeric device 21, with a consequent increase in the production costs.

Furthermore, the elastomeric device 21 loses the coating layer of the bases, consequently increasing corrosion on the part of external agents.

A third type of known constraint is obtained by means of the direct adhesion of an elastomeric device 31, this solution being schematically represented in figure 3 and globally indicated by reference number 30.

In this type of constraint, the elastomeric device 31, is attached directly to the anchoring plate 33, along the surface 32, so that the anchoring plate 33 can also be reasonably thin.

This third solution requires particular expedients to be adopted during the vulcanization phase of the seismic isolator (in particular special moulds are necessary), with a consequent increase in the costs.

An objective of the present invention is therefore to obtain a system for fixing elastomeric devices to a carrying structure which solves the above problems, optimizing the use of materials and, at the same time, limiting the production costs.

Another objective of the invention is to obtain a system for fixing elastomeric devices to a carrying structure which is particularly simple, economic and easy to set up.

A further objective of the invention is to obtain a system for fixing elastomeric devices to a carrying structure which allows a constraint to be produced which is extremely resistant to the shear stress generated during seismic actions or due to thermal deformation.

Yet another purpose of the invention is to obtain a system for fixing elastomeric devices to a carrying structure which is simple, safe and reliable.

These and other objectives can be achieved by means of a system for fixing elastomeric devices to a carrying structure, of the type comprising at least one of the above elastomeric devices, housed between a first position situated on the carrying structure, and a second position situated on an isolated structure, characterized in that in the above first and second position, there are substantially flat plates, each having a surface, which, by penetrating the innermost layer of the elastomer of the elastomeric device creates, under the action of a vertical load, an extremely shear resistant constraint.

According to a preferred embodiment of the present invention, the surfaces belonging to the flat plates are at least partially knurled, so that said knurling penetrates an internal layer of the elastomer of the elastomeric device, to produce an extremely shear resistant constraint.

According to another preferred embodiment of the present invention, the above elastomeric device is made of natural rubber or rubber containing additives or other polymers.

According to yet another preferred embodiment of the present invention, inside the above elastomeric device there is a series of plates made of steel or other reinforcing material.

The constraint with knurling advantageously requires only one flat plate which can be relatively thin.

Once this flat plate has been suitably processed, it forms part of a constraint which is particularly simple to set up, with obvious economic advantages.

The presence of knurled surfaces, which penetrate the innermost layer of the elastomer of the device under the action of a vertical load, creates a constraint which is extremely resistant to shear stress generated during seismic actions or due to thermal deformation.

Further characteristics of the present invention are defined in the claims enclosed with the present patent application.

Additional objectives and advantages of the present invention are evident from the following description and enclosed drawings, which are provided for purely illustrative and non-limiting purposes, wherein:
- figure 1 represents a partially sectional, schematic view of a system for fixing elastomeric devices to a structure, of the so-called containment type, according to the known art;
- figure 2 represents a partially sectional, schematic view of a system for fixing elastomeric devices to a structure, of the type with a central pin and bolts, according to another known technique;
- figure 3 represents a partially sectional, schematic view of a system for fixing elastomeric devices to a structure, of the direct adhesion type, according to another known technique;
- figure 4 represents a schematic view of the system for fixing elastomeric devices to a structure according to the present invention, in a neutral position;
- figure 5 represents a schematic view of the system for fixing elastomeric devices to a structure according to the present invention, in a position deformed by shear stress; and
- figure 6 represents a schematic view of a pair of seismic isolators, according to the present invention, during qualification tests carried out with specific equipment.

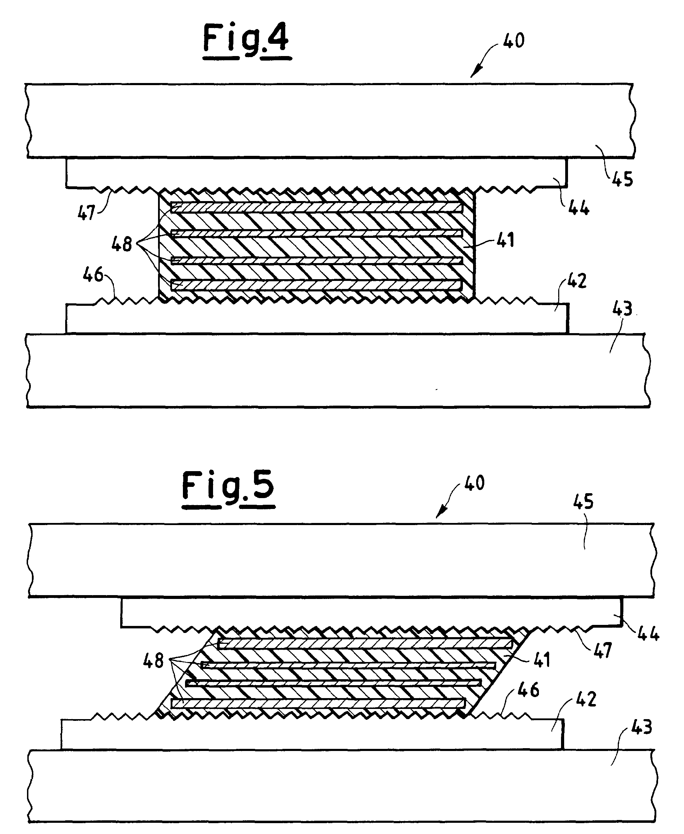

With particular reference to figures 4-5, the constraint system for elastomeric devices according to the present invention, is globally indicated by reference number 40.

The constraint system 40, represented in figure 4 in a neutral position, has an elastomeric device 41, or seismic isolator, which is housed between a first position, situated on the carrying structure 43, and a second position, situated on the isolated structure 45.

Inside the elastomeric device 41 there is a series of plates 48 made of steel or other reinforcing material.

The elastomeric device 40 comprises substantially flat plates, 42 and 44, which have surfaces 46 and 47, which are partially knurled.

With said knurled surfaces 46 and 47, the knurling, by penetrating the innermost layer of the elastomer of the device under the action of a vertical load, creates an extremely shear resistant constraint.

These properties of the system of the invention are represented with particular reference to figure 5, which illustrates the system 40 of the invention, in a position deformed by shear stress.

With reference to this figure, it can be observed that it is a portion of the surfaces 46 and 47, which penetrates an innermost layer of the elastomer of the device 41.

It should be noted that the constraint with knurling only requires one flat, relatively thin plate, suitably processed and is therefore particularly simple, economic and easy to set up.

For applying the constraint system with knurled plates, an elastomeric device made of natural rubber has been produced, to be positioned between the floor and carrying structure of a building to be protected from seismic actions.

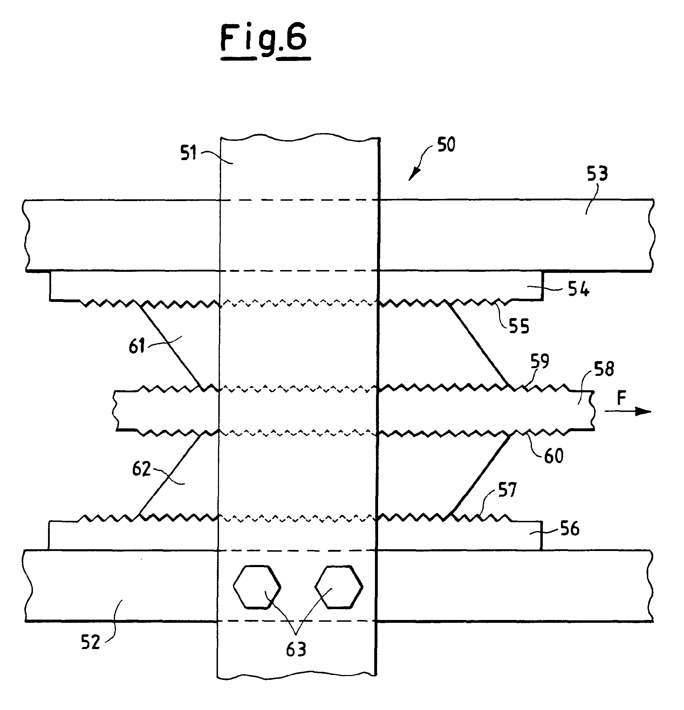

Finally, it should be noted that figure 6 represents a schematic view of a pair of seismic isolators, equipped with a constraint having knurled plates, adopted during qualification tests.

The particular equipment used for these tests is globally indicated in figure 6 with reference number 50 and consists of posts 51, fixed by means of fixing elements 63, to a base 52.

This arrangement allows a reduced vertical load to be applied, using a flat element 53, on which a plate 54 is applied, which in turn has a knurled surface 55.

Analogously a plate 56, having a knurled surface 57 is also applied on the base 52.

The equipment for qualification tests 50 also comprises a central element 58, having knurled surfaces 59 and 60 on both sides, which can be moved in the direction of the arrow F to obtain an increasing horizontal shift.

A first test sample 61, incorporating the constraint system of the present invention, is positioned between the knurled surfaces 55 and 59, belonging to the plate 54 and central element 58, respectively.

Analogously, a second test sample 62, incorporating the constraint system of the present invention, is positioned between the knurled surfaces 57 and 60, belonging to the plate 56 and central element 58, respectively.

The equipment for qualification tests 50 described above therefore allows tests to be effected which consist in the contemporaneous application of a reduced vertical load and an increasing horizontal shift up to a maximum of 400% shear deformations.

The experimental activity carried out on the system of the invention, using the equipment 50 described above, allows the following conclusions to be drawn.

Adhesion between the rubber of the device and the knurled plate is guaranteed, due to the action of an axial load which is lower than that normally used in practical cases, up to shear deformations of 400%.

In this respect, it is important to note that the maximum deformations allowed by regulations in force for elastomeric isolators must not exceed 200%.

The description clearly illustrates the characteristics of the system for fixing elastomeric devices to a carrying structure which is the object of the present invention, and also the advantages deriving therefrom.

The following concluding considerations and comments are now provided, in order to define the said advantages more clearly and accurately.

The constraint with knurling only requires one flat plate, having relatively thin dimensions, suitably processed and is particularly simple, economic and easy to set up.

The knurling, by penetrating the innermost layer of the elastomer of the device under the action of a vertical load applied thereto, creates a constraint which is extremely resistant to shear stress generated during seismic actions or thermal deformation.

The above advantages are obtained without significantly increasing the operating cost and production times.

The devices relating to the system of the present invention are, in fact, economic, not particularly invasive, easy to install and do not require maintenance.

Numerous variations can obviously be applied to the system for fixing elastomeric devices to a carrying structure, object of the present invention, without excluding any of the novelty principles which characterize the inventive idea illustrated.

Finally, it is apparent that, in the practical embodiment of the invention, the materials, forms and dimensions of the details illustrated of the system of the invention can vary according to the demands and can be replaced by others which are equivalent from a technical point of view.

The scope of the invention is defined by the enclosed claims.

## Claims

1. A system (40) for fixing elastomeric devices to a carrying structure, of the type comprising at least one of the above elastomeric devices (41), housed between a first position situated on the carrying structure (43), and a second position situated on a corresponding isolated structure (45), **characterized in that** in the above first and second position, there are substantially flat plates (42, 44), each of the above plates (42, 44) having a surface (46, 47) which, by penetrating the innermost layer of the elastomer of the above device creates, under the action of a vertical load, an extremely shear resistant constraint.

2. The constraint system (40) according to claim 1, **characterized in that** the above surfaces (46, 47) of the above flat plates (42, 44) are at least partially knurled, so that the above knurling is capable of penetrating an inner layer of the elastomer of the above device (41) to create an extremely shear resistant constraint.

3. The constraint system (40) according to claim 1, **characterized in that** the above elastomeric device (41) is made of natural rubber or rubber containing additives or other polymers.

4. The constraint system (40) according to claim 1, **characterized in that** inside the above elastomeric device (41), there is a series of plates made of steel (48) or another reinforcing material.
